Europäisches Patentamt

European Patent Office

Office européen des brevets

(19)

(11) Numéro de publication: **0 254 704**
**B1**

(12) ## FASCICULE DE BREVET EUROPEEN

(45) Date de publication du fascicule du brevet:
**03.01.90**

(21) Numéro de dépôt: **87870101.0**

(22) Date de dépôt: **20.07.87**

(51) Int. Cl.⁴: **B01F 17/00, C02F 1/68**

(54) **Compositions dispersantes pour le traitement de nappes d'huile à la surface de l'eau.**

(30) Priorité: **24.07.86 FR 8610742**

(43) Date de publication de la demande:
**27.01.88 Bulletin 88/4**

(45) Mention de la délivrance du brevet:
**03.01.90 Bulletin 90/1**

(84) Etats contractants désignés:
**BE DE ES GB GR IT NL SE**

(56) Documents cités:
**EP-B- 0 106 526**
**FR-A- 2 515 062**
**GB-A- 1 404 684**
**US-A- 3 793 218**
**US-A- 4 560 482**

(73) Titulaire: **LABOFINA S.A., 52, rue de l'Industrie,
B-1040 Bruxelles(BE)**

(72) Inventeur: **Charlier, Alain, Rameistraat, 17,
B-1900 Overijse(BE)**

(74) Mandataire: **Detrait, Jean-Claude, LABOFINA S.A.
Zoning Industriel, B-6520 Feluy(BE)**

## Description

La présente invention se rapporte à des compositions dispersantes pour le traitement de nappes d'huile à la surface de l'eau.

La pollution de l'eau de mer par des huiles (ce terme englobant le pétrole brut ainsi que des fractions de pétrole brut), provoquée par des accidents, des opérations de forage en mer, le rejet d'eaux de ballast ou des débordements à partir de navires pétroliers, conduit à la formation d'un film continu ou nappe d'huile qui tend à s'étendre. Ce film d'huile est nuisible, car il empêche le transfert, à partir de l'atmosphère, de l'air et de la lumière qui sont indispensables à la vie marine.

La technique la plus généralement utilisée consiste à traiter le film d'huile par des agents tensio-actifs qui désintègrent le film en gouttelettes d'huile et les dispersent dans la colonne d'eau sous la surface de la mer jusqu'à une profondeur de quelques mètres. Ce film est donc rompu et il y a de nouveau transfert d'air et de lumière à partir de l'atmosphère. De plus, la dispersion de l'huile sous forme de gouttelettes facilite la biodégradation par des micro-organismes marins.

Certains agents tensio-actifs sont de très efficaces agents dispersants pour ces nappes d'huile, mais ils ont provoqué de sérieux dommages à la vie marine lors de leur utilisation, du fait de leur trop grande toxicité vis-à-vis de la faune et de la flore aquatiques. D'autres agents tensio-actifs sont moins toxiques, mais ils sont peu efficaces pour disperser les nappes d'huile en mer. En fait, leur action n'est pas suffisamment longue car ils sont trop rapidement enlevés de la nappe d'huile sur laquelle ils ont été pulvérisés, par suite de l'action de lavage exercée par l'eau de mer, de sorte qu'il se produit une coalescence des gouttes d'huile qui s'agglomèrent et reforment une nappe d'huile.

Pour cette raison, les agents tensio-actifs sont généralement employés en mélange avec un solvant, en particulier un solvant de faible toxicité, tel que des hydrocarbures paraffiniques et cycloparaffiniques ou des alcools. L'incorporation d'un solvant est avantageuse, car il diminue le point d'écoulement de la composition, il réduit la viscosité de l'huile à traiter, il agit comme diluant pour l'agent tensio-actif qui est plus facilement et uniformément distribué dans la nappe d'huile et il réduit par conséquent le temps nécessaire pour mélanger le dispersant et l'huile.

Un autre problème qui se présente lors de l'utilisation d'agents tensio-actifs pour disperser les nappes d'huile est celui de leur solubilité dans l'eau. Certains de ces agents se dissolvent trop rapidement dans l'eau, de sorte qu'ils ne pénètrent pas dans la nappe d'huile. Pour remédier à cet inconvénient, on a proposé d'utiliser des compositions dispersantes contenant au moins deux agents tensio-actifs. La dispersion est meilleure quand on utilise des mélanges d'agents tensio-actifs dont les proportions sont choisies de telle sorte que la balance hydrophilelipophile (ou HLB) soit comprise entre certaines limites.

On voit donc que la tendance consiste à mettre en oeuvre des mélanges d'agents tensio-actifs utilisés conjointement avec un solvant. Une telle composition est décrite dans le brevet anglais 1,404,684 : le dispersant comprend un mélange d'ester d'acide gras et de polyalkylèneglycol avec un ester d'acide gras et de sorbitanne (HLB du mélange compris entre 9 et 10,5), dissous dans un solvant hydrocarboné contenant moins de 3 % en poids de composés aromatiques. La solution peut contenir de 5 à 50 % en poids de mélange de composés tensio-actifs, une proportion allant de 8 à 20 % en poids étant généralement préférée. D'autres brevets décrivent l'utilisation de compositions comprenant un monoester d'acide gras et de sorbitanne ainsi qu'un produit de polycondensation d'oxyde d'alkylène sur un tel monoester (brevet anglais 1,255,394) ou comprenant ces constituants en mélange avec 25 à 35 % en poids (compté en matière sèche) d'une solution aqueuse à 75 % d'un sel de sulfosuccinate dialkylique (brevet américain, 3,793,218). On obtient les meilleurs résultats en utilisant des compositions contenant environ 40 % de ce mélange de composés tensio-actifs et environ 60 % d'hydrocarbure isoparaffinique comme solvant.

Cependant, certaines compositions dispersantes contenant un mélange de composés tensio-actifs et de solvant ne donnent pas toujours entière satisfaction. Les unes doivent posséder une balance hydrophile-lipophile (ou HLB) comprise entre des limites trop étroites. D'autres exigent une forte agitation, c'est-à-dire une mer agitée, pour que la rupture du film d'huile se produise.

On voit donc qu'il serait nécessaire de pouvoir disposer de compositions dispersantes nouvelles, dont l'efficacité ne soit pas affectée par ces facteurs.

La présente invention a pour objet des compositions pour le traitement de nappes d'huile à la surface des eaux de mer, ces compositions améliorées et nouvelles répondant à un certain nombre de conditions :
- avoir une teneur élevée en agents tensio-actifs;
- exercer une action dispersante à la fois rapide et durable;
- être efficace aussi bien par mer calme (faible agitation) que par mer agitée;
- posséder une efficacité ne dépendant pas d'une valeur critique du HLB;
- se présenter sous forme de liquide homogène et limpide, exempt de matières insolubles;
- posséder une viscosité adéquate, permettant de pulvériser la composition à partir d'un bateau ou d'un avion;
- être non-toxique et biodégradable;
- pouvoir être fabriquée facilement et à bas prix.

Les compositions de la présente invention contiennent essentiellement un mélange de composés tensio-actifs dissous dans un mélange d'eau et de solvant hydrocarboné et elles sont caractérisées en ce que le mélange de composés tensio-actifs comprend :
55 à 65 % en poids d'agents émulgateurs consistant en un mélange A constitué de monooléate de sorbitanne et de dérivé oxyéthyléné de monooléate de sorbitanne, ce mélange A ayant un HLB compris entre environ 8,75 et 9,5, et un mélange B constitué de trioléate de sorbitanne et de dérivé oxyéthyléné de monooléate de sorbitanne, ce mélange B ayant un HLB compris entre environ 8 et 10, le rapport pondéral mélange A : mélange B étant compris entre environ 0,5/1 et 4/1;
45 à 35 % en poids de dioctylsulfosuccinate sodique en tant qu'agent mouillant, ce pourcentage étant calculé sur le poids de substance sèche.

Ces compositions se sont montrées particulièrement efficaces pour la dispersion de nappes d'huile, aussi bien sous faible agitation que sous forte agitation. De plus, cette efficacité se manifeste peu de temps après application de la composition sur la nappe d'huile. Ces résultats avantageux sont obtenus grâce à un choix judicieux des constituants et de leurs proportions.

Un agent émulgateur utilisé dans ces compositions est le monooléate de sorbitanne. D'autres monoesters de sorbitanne et d'acides gras, saturés ou non, contenant de 10 à 20 atomes de carbone peuvent être employés. Le choix du monoester dépend de plusieurs facteurs, tels que facilité d'approvisionnement, prix, pureté et, pour ces raisons, le monooléate de sorbitanne est le plus avantageusement utilisé.

Le mélange A d'agents émulgateurs est constitué de ce monooléate de sorbitanne et de dérivé oxyéthyléné de ce monoester, ce dernier étant notamment le produit obtenu par condensation d'environ 20 moles d'oxyde d'éthylène sur le monoester.

Les proportions de ces constituants dans le mélange A d'agents émulgateurs sont telles que le HLB du mélange soit de l'ordre de 8,75 à 9,5. Le HLB des composés tensioactifs ainsi que les méthodes pour la détermination de cette valeur sont donnés dans la littérature (voir notamment : Encyclopedia of Chemical Technology, par Kirk-Othmer 3e édition, Vol. 8, pp. 910-916). Le HLB du monooléate de sorbitanne est 4,3 et celui du dérivé à 20 moles d'oxyde d'éthylène est 15. La valeur du HLB d'un mélange de constituants est calculée à partir du pourcentage en poids et du HLB de chacun des constituants. Dans le cas du mélange A, les proportions respectives des constituants sont telles que le HLB du mélange soit de l'ordre d'environ 8,75 à environ 9,5. L'efficacité dispersante des compositions de l'invention est fortement influencée par le HLB de chaque mélange émulgateur. D'après un mode préféré d'exécution de l'invention, on utilise un mélange A d'émulgateurs dont le HLB est compris entre 9 et 9,25.

Le mélange B d'émulgateurs comprend du trioléate de sorbitanne (HLB = 1,8) et du monooléate de sorbitanne oxyéthyléné, ce dernier étant notamment le composé à 20 moles d'oxyde d'éthylène; le HLB de ce mélange B est de l'ordre de 8 à 10 environ. Des résultats particulièrement intéressants ont été obtenus en utilisant des compositions dispersantes de l'invention, dans lesquelles le mélange B d'émulgateurs a un HLB compris entre environ 8,5 et environ 9,5.

Le rapport pondéral entre le mélange A et le mélange B d'émulgateurs de l'invention peut varier entre de larges limites et il peut être compris entre environ 0,5/1 et 4/1. On obtient des taux d'efficacité particulièrement intéressants, tant au début de l'application de la composition dispersante que quelques heures après l'application, quand ce rapport pondéral est de l'ordre de 1,5/1 à 2,5/1.

L'agent mouillant est le dioctylsulfosuccinate sodique, et plus précisément le di(éthyl-2-hexyl) sulfosuccinate sodique, généralement disponible dans le commerce sous forme de solution à 75 % de matière active dans un mélange d'eau et d'alcool. Grâce à la présence de cet agent mouillant, les compositions de l'invention sont efficaces pour la dispersion des nappes d'huile sur la surface de l'eau, même sous faible agitation. Pour obtenir ce résultat, l'agent mouillant est généralement utilisé en une quantité telle que le rapport pondéral entre les agents émulgateurs (mélange A + mélange B) et l'agent mouillant (compté à l'état anhydre) est de l'ordre de 65/35 à 55/45.

Le choix du solvant est également important. En effet, les compositions dispersantes sont souvent diluées, par exemple à environ 10 % en volume, par de l'eau de mer avant application à partir de bateaux. Or, il arrive fréquemment que l'émulsion formée lors de cette dilution se rompe, par suite de son instabilité. La phase active, contenant les agents émulgateurs et l'agent mouillant, décante car sa densité est supérieure à celle de l'eau. Lors de l'application sur la nappe d'huile, cette phase active traverse la nappe d'huile, surtout en l'absence d'agitation. Par conséquent, par mer calme, le temps de contact entre l'huile et les agents émulgateurs est trop court et ces derniers ne peuvent pas agir efficacement. Pour éviter cet inconvénient, on utilise comme solvant, dans les compositions de l'invention, un mélange d'eau et de solvant hydrocarboné pétrolier à faible teneur en composés aromatiques, notamment du kérosène désaromatisé dont la teneur en composés aromatiques est inférieure à 3 % en poids et, de préférence, inférieure à 1 % en poids.

Les compositions de l'invention comprennent généralement au moins 50 % de composés tensio-actifs, à savoir agents émulgateurs et agent mouillant, le reste des compositions consistant en un mélange d'eau et de solvant hydrocarboné, en proportions pratiquement équipondérales. D'après un mode d'exécution de l'invention, les compositions comprennent :
30 à 35 % en poids d'agents émulgateurs consistant en mélange A et mélange B dans un rapport pondéral mélange A : mélange B compris entre 1,5/1 et 2,5/1;
20 à 25 % en poids de dioctylsulfosuccinate sodique comme agent mouillant;
le reste de compositions étant un mélange d'eau (40 à 50 % en poids) et de kérosène désaromatisé (60 à 50 % en poids).

Les exemples suivants sont donnés à titre d'illustration et ils ne comportent aucun caractère limitatif.

D'après ces exemples, on se réfère à deux méthodes de détermination de l'efficacité d'une composition dispersante, qui sont respectivement la méthode du Warren Spring Laboratory (sous vive agitation) et la méthode de l'Institut Français du Pétrole (sous faible agitation).

D'après la méthode du Warren Spring Laboratory (méthode WSL), on ajoute la composition dispersante, goutte à goutte, à une quantité déterminée d'huile flottant à la surface d'une colonne d'eau de mer contenue dans une ampoule à décantation. On soumet cette ampoule à un mouvement de rotation. Après un certain temps, on laisse reposer et on détermine la quantité d'huile qui a été dispersée dans la colonne d'eau. L'efficacité d'une dispersion est exprimée par le pourcentage d'huile qui a été dispersée dans la phase aqueuse (A specification for oil spill dispersants, Warren Spring Laboratory Report nº LR 448-OP).

Dans la méthode de l'Institut Français du Pétrole (méthode I.F.P.), on travaille par dilution et avec une faible énergie d'agitation apportée par un batteur de surface. L'efficacité est déterminée par le taux d'huile entraînée pendant un certain temps, hors du système, par un courant d'eau (Chemical oil dispersion in trials at sea and laboratory test : the key-role of dilution processes; Symposium on oil spill dispersants, 1982, American Society for Testing Materials).

Dans ces exemples, les pourcentages indiqués pour les constituants sont des pourcentages en poids.

### Exemple 1.

A un mélange A d'agents émulgateurs, ayant un HLB de 8,9 et constitué de monooléate de sorbitanne et de monooléate de sorbitanne condensé avec 20 moles d'oxyde d'éthylène, on a ajouté un mélange B d'agents émulgateurs, ayant un HLB de 8,7 comprenant du trioléate de sorbitanne et du monooléate de sorbitanne condensé avec 20 moles d'oxyde d'éthylène. Le rapport pondéral entre le mélange A et le mélange B était 1,9/1.

Avec ces émulgateurs, on a préparé une composition dispersante comprenant :

30 % de mélange A + mélange B,
20 % de dioctylsulfosuccinate sodique (compté en produit sec),
25 % de kérosène désaromatisé,
25 % d'eau.

On a déterminé l'efficacité dispersante de cette composition en appliquant la méthode I.F.P., l'huile utilisée étant du brut arabe léger étêté à 150°C. On a employé 0,2 millilitre de composition pour 5 millilitres d'huile.

A titre de comparaison, on a préparé une composition similaire, mais en remplaçant le trioléate de sorbitanne respectivement par
- dérivé oxyéthyléné (20 moles d'oxyde d'éthylène) de trioléate de sorbitanne (composition comparative 1);
- dérivé oxyéthyléné (20 moles d'oxyde d'éthylène) d'hexaoléate de sorbitanne (composition comparative 2).

Les résultats des essais d'efficacité suivant la méthode I.F.P. sont donnés dans le Tableau 1.

Tableau 1

| Composition | Efficacité dispersante (en %) après | | |
|---|---|---|---|
| | 30 minutes | 60 minutes | 120 minutes |
| Comp. de l'exemple 1 | 72 | 85 | 88 |
| Comp. comparative 1 | 52 | 71 | 78 |
| Comp. comparative 2 | 51 | 70 | 78 |

### Exemple 2.

On a préparé des compositions comprenant les constituants décrits dans l'Exemple 1, mais en faisant varier les quantités respectives d'agents émulgateurs (mélange A + mélange B) et d'agent mouillant (dioctylsulfosuccinate sodique ou DOSS-Na), sans modifier les pourcentages de solvant et d'eau.

Dans ces compositions, les rapports pondéraux de mélange A+mélange B par rapport à l'agent mouillant étaient

63/37 : composition de l'invention;
60/40 : composition de l'exemple 1;
55/45 : composition de l'invention;
70/30 : composition en dehors de l'invention;
50/50 : composition en dehors de l'invention.

L'efficacité de chacune de ces compositions a été déterminée après 60 minutes, en utilisant la méthode

I.F.P. comme décrit à l'Exemple 1, ainsi que la méthode WSL. Les résultats sont repris dans le Tableau 2.

Tableau 2

| Rapport pondéral émulgateurs/ mouillant | Efficacité dispersante (en %) après 60 minutes | |
| --- | --- | --- |
| | Méthode I.F.P. | Méthode WSL |
| 63/37 | 78 | 90 |
| 60/40 | 85 | 87 |
| 55/45 | 76 | 78 |
| 70/30 | 25 | 60 |
| 50/50 | 40 | 55 |

Ces essais montrent que le rapport pondéral entre les agents émulgateurs et l'agent mouillant doit être maintenu entre environ 65/35 et 55/45. On obtient des résultats particulièrement intéressants quand ce rapport est de l'ordre de 60/40.

Exemple 3.

A un mélange A d'agents émulgateurs, ayant un HLB de 9,2 et constitué de monooléate de sorbitanne et de composé oxyéthyléné de monooléate de sorbitanne (20 moles d'oxyde d'éthylène), on a ajouté un mélange B d'agents émulgateurs, ayant un HLB de 9,5 et constitué de trioléate de sorbitanne et de composé oxyéthyléné de monooléate de sorbitanne (20 moles d'oxyde d'éthylène). On a préparé différentes compositions en faisant varier les quantités respectives de mélange A et de mélange B, tout en maintenant constante la quantité totale d'agents émulgateurs.

Ces compositions contenaient :
34 % d'agents émulgateurs (mélange A et/ou mélange B),
23 % de DOSS-Na (compté anhydre),
22 % de kérosène désaromatisé,
21 % d'eau.

Les quantités respectives de mélange A et de mélange B, ainsi que les résultats d'efficacité, sont donnés dans le Tableau 3.

Tableau 3

| Compos. No | Agents émulg. (% en poids) | | Rapp. pond. Mélange A/Mél. B | Efficacité (%) après | | |
| --- | --- | --- | --- | --- | --- | --- |
| | Mél. A | Mél. B | | 30 min. | 60 min. | 120 min. |
| A[*] | 34 | – | – | 50 | 74 | 80 |
| B[*] | 29,2 | 4,8 | 6/1 | 52 | 74 | 80 |
| C | 27,2 | 6,8 | 4/1 | 59 | 80 | 84 |
| D | 24,2 | 9,7 | 2,5/1 | 68 | 80 | 86 |
| E | 22,7 | 11,3 | 2/1 | 72 | 85 | 90 |
| F | 20,3 | 13,7 | 1,5/1 | 70 | 82 | 88 |
| G | 17 | 17 | 1/1 | 66 | 78 | 86 |
| H | 11,3 | 22,7 | 0,5/1 | 65 | 77 | 84 |
| I[*] | 3 | 31 | 0,1/1 | 54 | 73 | 74 |
| J[*] | – | 34 | – | 55 | 73 | 75 |

[*] Compositions en dehors de l'invention.

On voit que l'efficacité des compositions est nettement améliorée lorsque le rapport pondéral du mélange A d'agents émulgateurs par rapport au mélange B est de l'ordre d'environ 0,5/1 à 4/1.

Exemple 4.

On a préparé une composition contenant :
34 % d'un mélange A d'émulgateurs, ayant un HLB de 9,2 et constitué de monooléate de sorbitanne et de composé oxyéthyléné de monooléate de sorbitanne (20 moles d'oxyde d'éthylène), auquel on a ajouté un mélange B d'émulgateurs, ayant un HLB de 8,5 et constitué de trioléate de sorbitanne et de composé oxyéthyléné de monooléate de sorbitanne, le rapport pondéral mélange A/mélange B étant égal à 2/1 ;
22 % de dioctylsulfosuccinate sodique (compté anhydre),
23 % de kérosène désaromatisé,
21 % d'eau.

A titre de comparaison, on a aussi préparé des compositions similaires, mais en utilisant des mélanges B d'émulgateurs, ayant également un HLB de 8,5 mais constitués de :
composition K : monooléate de sorbitanne et monooléate de sorbitanne éthoxylé,
composition L : trioléate de sorbitanne et trioléate de sorbitanne éthoxylé,
composition M : monooléate de sorbitanne et trioléate de sorbitanne éthoxylé.

Les résultats des essais d'efficacité sont repris dans le Tableau 4.

Tableau 4

| Composition | Efficacité dispersante (en %) après | | |
|---|---|---|---|
| | 30 minutes | 60 minutes | 120 minutes |
| Comp. de l'exemple 4 | 72 | 84 | 88 |
| Composition K | 15 | 27 | 30 |
| Composition L | 26 | 64 | 76 |
| Composition M | 20 | 32 | 52 |

Ces résultats font ressortir qu'une composition dispersante dont le mélange d'émulgateurs B est constitué de trioléate de sorbitanne et de monooléate de sorbitanne éthoxylé est nettement plus efficace que des compositions où le mélange B contient des constituants similaires, bien que le HLB reste le même.

L'efficacité des nouvelles compositions de l'invention résulte de plusieurs facteurs, dont les principaux sont le choix des agents émulgateurs et de leurs proportions, ainsi que le rapport pondéral entre la quantité totale des émulgateurs et la quantité d'agent mouillant.

**Revendications pour les Etats contractants: BE, DE, GB, GR, IT, NL, SE**

1) Compositions dispersantes pour le traitement de nappes d'huile à la surface de l'eau, ces compositions contenant essentiellement un mélange de composés tensio-actifs dissous dans un mélange d'eau et de solvant hydrocarboné et étant caractérisés en ce que le mélange de composés tensio-actifs comprend :
55 à 65 % en poids d'agents émulgateurs consistant en un mélange A constitué de monooléate de sorbitanne et de dérivé oxyéthyléné de monooléate de sorbitanne, ce mélange A ayant un HLB compris entre environ 8,75 et 9,5, et un mélange B constitué de trioléate de sorbitanne et de dérivé oxyéthyléné de monooléate de sorbitanne, ce mélange B ayant un HLB compris entre environ 8 et 10, le rapport pondéral mélange A : mélange B étant compris entre environ 0,5/1 et 4/1 ;
45 à 35 % en poids de dioctylsulfosuccinate sodique en tant qu'agent mouillant, ce pourcentage étant calculé sur le poids de substance sèche.

2) Compositions selon la revendication 1, caractérisées en ce que le HLB du mélange A est compris entre 9 et 9,25.

3) Compositions selon l'une quelconque des revendications 1 et 2, caractérisées en ce que le HLB du mélange B est compris entre 8,5 et 9,5.

4) Compositions selon l'une quelconque des revendications 1 à 3, caractérisées en ce que le rapport pondéral mélange A : mélange B est compris entre 1,5/1 et 2,5/1.

5) Compositions selon l'une quelconque des revendications 1 à 4, caractérisées en ce qu'elles contiennent au moins 50 % en poids de composés tensio-actifs.

6) Compositions selon l'une quelconque des revendications 1 à 4, caractérisées en ce qu'elles contiennent 30 à 35 % en poids d'agents émulgateurs et 20 à 25 % en poids d'agent mouillant, le reste étant un mélange constitué de 40 à 50 % en poids d'eau et de 60 à 50 % en poids de kérosène désaromatisé.

**Revendications pour l'Etat contractant: ES**

1. Procédé de traitement de nappes d'huile à la surface de l'eau, par des compositions dispersantes, ces compositions contenant essentiellement un mélange de composés tensio-actifs dissous dans un mélange d'eau et de solvant hydrocarboné et étant caractérisées en ce que le mélange de composés tensio-actifs comprend:
55 à 65% en poids d'agents émulgateurs consistant en un mélange A constitué de monooléate de sorbitanne et de dérivé oxyéthyléné de monooléate de sorbitanne, ce mélange A ayant un HLB compris entre environ 8,75 et 9,5, et un mélange B constitué de trioléate de sorbitanne et de dérivé oxyéthyléné de monooléate de sorbitanne, ce mélange B ayant un HLB compris entre environ 8 et 10, le rapport pondéral mélange A : mélange B étant compris entre environ 0,5/1 et 4/1 ;

45 à 35% en poids de dioctylsulfosuccinate sodique en tant qu'agent mouillant, ce pourcentage étant calculé sur le poids de substance sèche.

2. Procédé selon la revendication 1, caractérisé en ce que le HLB du mélange A est compris entre 9 et 9,25.

3. Procédé selon l'une quelconque des revendications 1 et 2, caractérisé en ce que le HLB du mélange B est compris entre 8,5 et 9,5.

4. Procédé selon l'une quelconque des revendications 1 à 3, caractérisé en ce que le rapport pondéral mélange A : mélange B est compris entre 1,5/1 et 2,5/1.

5. Procédé selon l'une quelconque des revendications 1 à 4, caractérisé en ce que les compositions dispersantes contiennent au moins 50% en poids de composés tensio-actifs.

6. Procédé selon l'une quelconque des revendications 1 à 4, caractérisé en ce que les compositions dispersantes contiennent 30 à 35% en poids d'agents émulgateurs et 20 à 25% en poids d'agent mouillant, le reste étant un mélange constitué de 40 à 50% en poids d'eau et de 60 à 50% en poids de kérosène désaromatisé.

**Patentansprüche für die Vertragsstaaten: BE, DE, GB, GR, IT, NL, SE**

1. Dispergierende Zusammensetzungen zur Behandlung von Ölflächen auf der Wasseroberfläche, enthaltend im wesentlichen ein Gemisch aus in einer Mischung aus Wasser und Kohlenwasserstofflösungsmittel gelösten oberflächenaktiven Verbindungen, gekennzeichnet dadurch, daß das Gemisch der oberflächenaktiven Verbindungen folgendes umfasst:
55 bis 65 Gew.-% Emulgiermittel, bestehend aus einem Gemisch A, das aus Sorbitanmonooleat und Oxyethylenderivat von Sorbitanmonooleat gebildet ist, wobei das Gemisch A einen HLB-Wert zwischen etwa 8,75 und 9,5 aufweist, und einem Gemisch B, das aus Sorbitantrioleat und Oxyethylenderivat von Sorbitanmonooleat gebildet ist, wobei das Gemisch B einen HLB-Wert zwischen etwa 8 und 10 aufweist, wobei das Gewichtsverhältnis von Gemisch A zu Gemisch B zwischen etwa 0,5/1 und 4/1 liegt;
45 bis 35 Gew.-% Natriumdioctylsulfosuccinat als Netzmittel, wobei dieser prozentuale Anteil auf das Gewicht der trockenen Substanz berechnet ist.

2. Zusammensetzungen nach Anspruch 1, dadurch gekennzeichnet, dass der HLB-Wert der Mischung A zwischen 9 und 9,25 liegt.

3. Zusammensetzung nach einem der Ansprüche 1 und 2, dadurch gekennzeichnet, dass der HLB-Wert der Mischung B zwischen 8,5 und 9,5 liegt.

4. Zusammensetzung nach einem der Ansprüche 1 bis 3, dadurch gekennzeichnet, dass das Gewichtsverhältnis von Mischung A zu Mischung B zwischen 1,5/1 und 2,5/1 liegt.

5. Zusammensetzung nach einem der Ansprüche 1 bis 4, dadurch gekennzeichnet, dass sie mindestens 50 Gew.-% an oberflächenaktiven Verbindungen enthalten.

6. Zusammensetzung nach einem der Ansprüche 1 bis 4, dadurch gekennzeichnet, dass sie 30 bis 35 Gew.-% Emulgiermittel und 20 bis 25 Gew.-% Netzmittel enthalten, wobei der Rest eine Mischung aus 40 bis 50 Gew.-% Wasser und 60 bis 50 Gew.-% entaromatisiertem Kerosin ist.

**Patentansprüche für den Vertragsstaat: ES**

1. Verfahren zur Behandlung von Ölflächen auf der Wasseroberfläche mit dispergierenden Zusammensetzungen, enthaltend im wesentlichen ein Gemisch aus in einer Mischung aus Wasser und Kohlenwasserstofflösungsmittel gelösten oberflächenaktiven Verbindungen, gekennzeichnet dadurch, dass das Gemisch der oberflächenaktiven Verbindungen folgendes umfasst:
55 bis 65 Gew.-% Emulgiermittel, bestehend aus einem Gemisch A, das aus Sorbitanmonooleat und Oxyethylenderivat von Sorbitanmonooleat gebildet ist, wobei das Gemisch A einen HLB-Wert zwischen etwa 8,75 und 9,5 aufweist, und einem Gemisch B, das aus Sorbitantrioleat und Oxyethylenderivat von Sorbitanmonooleat gebildet ist, wobei das Gemisch B einen HLB-Wert zwischen etwa 8 und 10 aufweist, wobei das Gewichtsverhältnis von Gemisch A zu Gemisch B zwischen etwa 0,5/1 und 4/1 liegt;
45 bis 35 Gew.-% Natriumdioctylsulfosuccinat als Netzmittel, wobei dieser prozentuale Anteil auf das Gewicht der trockenen Substanz berechnet ist.

2. Verfahren nach Anspruch 1, dadurch gekennzeichnet, dass der HLB-Wert der Mischung A zwischen 9 und 9,25 liegt.

3. Verfahren nach einem der Ansprüche 1 und 2, dadurch gekennzeichnet, dass der HLB-Wert der Mischung B zwischen 8,5 und 9,5 liegt.

4. Verfahren nach einem der Ansprüche 1 bis 3, dadurch gekennzeichnet, dass das Gewichtsverhältnis von Mischung A zu Mischung B zwischen 1,5/1 und 2,5/1 liegt.

5. Verfahren nach einem der Ansprüche 1 bis 4, dadurch gekennzeichnet, dass die dispergierenden Zusammensetzungen mindestens 50 Gew.-% an oberflächenaktiven Verbindungen enthalten.

6. Verfahren nach einem der Ansprüche 1 bis 4, dadurch gekennzeichnet, dass sie 30 bis 35 Gew.-% Emulgiermittel und 20 bis 25 Gew.-% Netzmittel enthalten, wobei der Rest eine Mischung aus 40 bis 50 Gew.-% Wasser und 60 bis 50 Gew.-% entaromatisiertem Kerosin ist.

**Claims for the Contracting States: BE, DE, GB, GR, IT, NL, SE**

1. Dispersing compositions for the treatment of oil slicks on water, said compositions containing essentially a mixture of surface-active compounds which are dissolved in a mixture of water and hydrocarbon solvent and being characterized by the fact that the mixture of surface-active compounds comprises:

55 to 65% by weight of emulsifying agents consisting of a blend A of sorbitan monooleate and sorbitan monooleate oxyethylene derivative, said blend A having an HLB comprised between about 8.75 and 9.5, and a blend B of sorbitan trioleate and sorbitan monooleate oxyethylene derivative, said blend B having an HLB comprised between about 8 and 10, wherein the weight ratio of said blend A to said blend B is between about 0.5/1 and 4/1;

45 to 35% by weight of sodium dioctyl sulfosuccinate as wetting agent, said percentage being calculated on the weight of dry substance.

2. Compositions according to claim 1, wherein the HLB of the blend A is comprised between about 9 and 9.25.

3. Compositions according to either of claims 1 or 2, wherein the HLB of the blend B is comprised between about 8.5 and 9.5.

4. Compositions according to any one of claims 1 to 3, wherein the weight ratio of blend A to blend B is between about 1.5/1 and 2.5/1.

5. Compositions according to any one of claims 1 to 4, wherein the dispersing compositions contain at least 50% by weight of surface-active compounds.

6. Compositions according to any one of claims 1 to 4, wherein the dispersing compositions contain 30 to 35% by weight of emulsifying agents and 20 to 25% by weight of wetting agent, with the remainder being a blend comprising 40 to 50% by weight of water and 60 to 50% by weight of dearomatized kerosene.

**Claims for the Contracting State: ES**

1. A process for treating oil slicks on water using dispersing compositions, said compositions containing essentially a mixture of surface-active compounds which are dissolved in a mixture of water and hydrocarbon solvent, and being characterized by the fact that the mixture of surface-active compounds comprises:

55 to 65% by weight of emulsifying agents consisting of a blend A of sorbitan monooleate and sorbitan monooleate oxyethylene derivative, said blend A having an HLB comprised between about 8.75 and 9.5, and a blend B of sorbitan trioleate and sorbitan monooleate oxyethylene derivative, said blend B having an HLB comprised between about 8 and 10, wherein the weight ratio of said blend A to said blend B is between about 0.5/1 and 4/1;

45 to 35% by weight of sodium dioctyl sulfosuccinate as wetting agent, said percentage being calculated on the weight of dry substance.

2. A process to claim 1, wherein the HLB of the blend A is comprised between about 9 and 9.25.

3. A process to either of claims 1 or 2, wherein the HLB of the blend B is comprised between about 8.5 and 9.5.

4. A process to any one of claims 1 to 3, wherein the weight ratio of blend A to blend B is between about 1.5/1 and 2.5/1.

5. A process to any one of claims 1 to 4, wherein the dispersing compositions contain at least 50% by weight of surface-active compounds.

6. A process to any one of claims 1 to 4, wherein the dispersing compositions contain 30 to 35% by weight of emulsifying agents and 20 to 25% by weight of wetting agent, with the remainder being a blend comprising 40 to 50% by weight of water and 60 to 50% by weight of dearomatized kerosene.